# EUROPEAN PATENT APPLICATION

(11) **EP 3 892 593 A1**
(43) Date of publication of application: **13.10.2021**
(21) Application number: 19891741.1
(22) Date of filing: 05.12.2019
(51) Int. Cl.: C03B 23/055, C03B 23/09

(54) **DEVICE FOR PROCESSING GLASS MEMBER**

(30) Priority: 07.12.2018 JP 2018229710
(71) Applicant: Nipro Corporation, Osaka-shi, Osaka 531-8510 (JP)
(72) Inventor: MORIUCHI, Kazuhisa, Osaka-shi, Osaka 531-8510 (JP); ISHIMI, Yoshitaka, Osaka-shi, Osaka 531-8510 (JP)
(74) Representative: Prinz & Partner mbB
(86) International application number: PCT/JP2019/047697
(87) International publication number: WO 2020/116584

(57) **Abstract**

In a method for manufacturing a glass container, an additional step which removes oil used in forming from the glass container is simplified.

The device (14) which processes a glass member (10) a portion of which is heated to a processable temperature is configured such that at least a portion of the device which comes into contact with the heated portion of the glass member is formed of an impregnated graphite material.

## Description

### [Technical Field]

The present invention relates to a device used for processing a glass member, and for example, relates to a device used for processing a heated glass member for manufacturing a glass container, particularly for forming a glass member. Such device can be used for the production of, for example, a glass container having a mouth portion and a bottom portion, especially a medical glass container such as a vial, an ampoule, a syringe, a cartridge or the like. The present invention also relates to a method of processing a glass member using such device. Further, the present invention relates to a method for manufacturing a glass container using such device and such processing method, and also relates to a glass container which is manufactured by the manufacturing method.

### [Background Art]

As a method for manufacturing a glass container into which a medical material is supplied, a method described in Patent Document 1 below is known. In this method, a mandrel is disposed inside an end of a heated glass tube, and a pair of rollers are located outside of the end, so that the end of the glass tube is sandwiched by the mandrel and the rollers. The ends of the glass tube is formed into a mouth portion having a shoulder portion and a flange portion located at the edge of the shoulder portion by the mandrel and the rollers while they are pivotally rotated. Then, a portion of the glass tube located at a predetermined length (upward) away from the end of the glass tube is heated, and the thus formed glass tube portion having the mouth portion and the predetermined length is burnt off from the remaining glass tube portion. A bottom plate and a pair of rollers are pressed against the burnt off portion of the glass portion, and a shape of the burnt off part is arranged to be planar so that the other end of the glass portion has a bottom portion. As a result, a glass container with thus formed mouth portion and bottom portion is obtained.

In the conventional manufacture of the glass containers described above, a portion of devices which come into contact with the heated glass portion such as the rollers, the mandrel and the bottom plate are usually made of a metal or ceramic. Although the metal portion of such a device is suitable for processing glass members, it is necessary to coat the metal portion with oil in order to improve the slipperiness of the metal portion with respect to the glass tube. Therefore, since the oil is attached to the obtained glass container, an additional step of removing the oil from the glass container is required. Also, it is possible that the metal portion is worn through its long-term use, or in addition, fine glass particles adhere to the metal portion so that unevenness occurs on a surface of the metal portion that comes into contact with the heated glass tube. When a glass member is formed while using a device having a metal portion having such unevenness, the surface of the glass container may be roughened by the unevenness, and as a result, a smooth surface having good light reflectivity may not be obtained.

When a device having a ceramic portion is used, scraped fine ceramic particles generated by the contact between the glass tube and the ceramic portion may adhere to the surface of the glass container. As a result, an additional step is required to remove such adhering particles.

### [Prior Art Document]

### [Patent Document]

[Patent Document 1] US Patent No. 2935819 (which discloses a whole manufacturing process of glass containers)

### [Summary of Invention]

### [Problems to be Solved by Invention]

Therefore, it is desired to provide a method for manufacturing a glass container that simplifies, most preferably can be omitted, the additional steps as described above in the method for manufacturing a glass container. Further, it is desired that the surface of the manufactured glass container has a better smoothness and a better light reflectivity.

### [Means for Solving Problems]

After extensive studies as to the materials used for the devices described above, the inventors have found that for processing a heated glass member such as a heated glass tube or a portion of a heated glass tube having a predetermined length, when at least a portion of a device such as a roller, a mandrel or a bottom plate which comes into contact with a heated portion of the heated glass member is formed of an impregnated graphite material, and the most preferably when a whole portion of such device which comes into contact with such heated portion is formed of an impregnated graphite material, the above described additional steps is simplified and preferably omitted, which have resulted in the present invention.

In the first aspect, the present invention provides a device for processing a glass member at least a portion of which is heated to a processable temperature, which is usually equal to or above its softening point, characterized in that at least a portion of the device which comes into contact with a heated portion of the glass member is formed of an impregnated graphite material. It has been found that when the glass member is processed using such a device, not only the additional steps can be simplified, but also in a preferred embodiment, the smoothness and the light reflectivity of the processed surface of the obtained glass member are good, and preferably they are improved compared with those achieved by the conventional processing method.

In the present invention, the "glass member" is an object to be processed and made of a glass material, and is not particularly limited as long as it is made of the glass material. The glass member is usually a glass tube or a portion of a glass tube having a predetermined length. The glass member is usually tubular (or annular or hollow), which is not always necessary. Optionally, the glass member may be in a massive form, a bar form, a plate form or any other required form. In a particularly preferred embodiment, the glass member is axisymmetric, for example, in a circular tube, a columnar shape or the like, and its diameter may change or be constant along its axial direction. In the case of the axisymmetry, the glass member and/or the device can be pivotally rotated.

The "glass material" which forms the glass member is not particularly limited, and may be a material generally called as glass. In one preferred embodiment, the glass material is a borosilicate glass, which is particularly preferable for manufacturing medical glass containers. If necessary, the glass material may be other kinds of glass, for example, a soda-lime glass, a quartz glass or the like.

In the present invention, "processing" means at least one of, and preferably both of making a predetermined portion of the glass member (for example, a main surface, an inner surface, an outer surface, a bottom portion, a mouth portion, a side surface portion, etc.) into a form which is required macroscopically (for example, a flattened form, a recessed form, a protruding form, a constricted form or the like), and making the predetermined portion into a form which is required microscopically (for example, a form having a conditioned surface, a less irregularity surface, a smooth surface or the like). Therefore, "processing" means forming (or shaping) of a glass member, and particularly forming the glass member to have a predetermined form. Generally, upon processing, at least one of the glass member and the device is pivotally rotated relative to the other to arrange a form (or shape) of the glass member to have a predetermined form.

Upon processing, a predetermined portion of the glass member is preheated to a temperature at which it can be processed. In general, the predetermined portion of the glass member is heated to a temperature equal to or higher than a softening point of the glass material, and preferably to a temperature within a working temperature range, for example, to a work point. If necessary, heating may also be carried out during processing. Such a temperature is peculiar to the kind of the glass material, and a person skilled in the art can appropriately select the temperature to which the glass member should be heated.

In one embodiment, when a glass container having a bottom portion and a side surface portion is obtained by "processing" with using a glass member of the circular tube, the glass tube is processed using the device according to the present invention (for example, a roller(s) and a mandrel when required) so that one end of the glass member has a mouth portion having a desired form, and/or the device according to the present invention (for example, a bottom plate and a roller(s) when required) is used such that the other end of the glass member has a bottom portion having a desired form. For example, the glass member is formed such that the bottom portion has an outer surface as a flat bottom surface, and the mouth portion has a shoulder portion and/or a flange portion at an edge of the shoulder portion (that is, at the open end).

With the device according to the present invention, at least a portion of, and preferably substantially all, of the portions which come into contact with the glass member during processing of the glass member is formed of the impregnated graphite material. The device of the present invention may have such impregnated graphite material in any form. In one embodiment, the device according to the present invention may have such impregnated graphite material in the form of a thin layer. In this embodiment, a substrate constituting the device (for example, a graphite substrate) is used such that the thin layer of the impregnated graphite is attached to a portion of the substrate which portion comes into contact with the glass member. In other embodiment, the device may be formed of substantially only the impregnated graphite material. For example, by cutting and machining, a massive body of the impregnated graphite material may be formed into a device to have a desired form (for example, a roller, a mandrel, a bottom plate or the like), which will be described later with reference to the drawings.

As to the device of the present invention, the "impregnated graphite material" means a material in the state wherein a substrate (or base) made of a graphite material has pores in which a carbon material different from the graphite material is present, and therefore a material in the state wherein the substrate of the graphite material is impregnated with a carbon material other than the graphite material. Conceptually, the "impregnated graphite material" may be explained to have a form from a macroscopic viewpoint in which the graphite material constituting the substrate is coated with other carbon material; a form from a microscopic viewpoint in which the graphite particles and/or the aggregates of such particles are coated with other carbon material, and/or a form in which other carbon material is present in the voids inside the graphite material substrate, and preferably fills the voids in the substrate, in detail the voids located from the surface of the substrate to a predetermined depth from the surface. As the "other carbon material", a carbon material such as a glassy carbon, a pyrolytic carbon and the like can be exemplified, and the glassy carbon is particularly preferred.

When such impregnated graphite material is used, properties of the graphite material as a substrate material are appropriately combined with the strength of the glassy carbon or the pyrolytic carbon, and thus a device suitable for processing the glass member can be provided. The other carbon material within the impregnated graphite material can maintain the integrity of the graphite material which constitutes the substrate and suppress the detachment of graphite particles from the substrate of the graphite material. As a result, it is conceived that the moderate softness of the substrate of the graphite material results in appropriate slipping of the device as to the glass member with a smaller amount of the oil used, and preferably without oil used while the generation of the graphite particles can be suppressed during processing.

In a particularly preferred embodiment in which the glassy carbon is used as the other carbon material, when the glass member is processed by sliding both of the device and the glass member relative to each other while being in contact with each other, preferably with pivotally rotating, the combination of the base material of the graphite material and the other impregnating carbon material improves the transparency of the obtained glass container, in addition to providing the glass container which has a desired form and a good surface light reflectivity. Moreover, when manufacturing the glass container in this way, the use of oil can be suppressed, and preferably omitted.

As the graphite material impregnated with the glassy carbon, a material in which the glassy carbon is impregnated into the inside of the substrate in addition to the surface thereof (a glassy carbon impregnated graphite material) can be preferably used. The impregnation depth is, for example, preferably 1 mm or more, and more preferably 10 mm or less. As such a graphite material, for example, VGI (a graphite product of IBIDEN Co., Ltd.) can be used. Further, as a graphite material having a surface treatment layer of the pyrolytic carbon, a graphite material can be used which has a coating by chemical vapor deposition of carbon. Preferably, the graphite material is an isotropic graphite. As such graphite material, for example, PYROCARB (a graphite product of IBIDEN Co., Ltd.) can be used.

In the second aspect, the present invention provides a method for processing a glass member, and it is characterized in that the device according to the present invention described above and/or below is used upon processing. More specifically, the method is characterized in that the device of the present invention described above, specifically, the portion made of the impregnated graphite material of the device is brought into contact with a predetermined portion of the glass member heated to a processable temperature for processing of the glass member. For example, while the device and the glass member are in contact with each other, one is moved relative to the other. In a particularly preferred embodiment, the device of the present invention is used in the method of processing the tubular glass member, wherein at least one of the glass member and the device, preferably both, are pivotally rotated so that one is moved relatively to the other in an opposite direction while they are in contact with each other as described above. As can be easily understood, when these are pivotally rotated while being in contact, the glass member is axisymmetric, for example, a circular tube or a circular column, and a portion of the device which comes into contact with the glass member is axisymmetric, for example, preferably in the form of a circular annular form, a cylindrical form, a disk form, a columnar form, or a combination thereof.

In the third aspect, the present invention provides a method for manufacturing a glass container, and it is characterized in that the device and the processing method according to the present invention described above and/or below are applied to the method using a glass tube having a predetermined length as a glass member. In one embodiment, the method includes (1) a step of heating a portion of the glass tube as the glass member (for example, one end portion) to a processable temperature, and (2) a step of pivotally rotating at least one of the glass member and the device according to the present invention so that these are rotated relatively in the opposite directions while pressing a portion of the graphite carbon material of the device against the heated portion.

In the fourth aspect, the present invention also provides a glass container manufactured by the method for manufacturing the glass container according to the present invention described above and/or below.

In the present invention, the glass container is a container made of a glass which has a mouth portion and a bottom portion, and made of, for example, a borosilicate glass. The glass container is preferably a medical container, and for example, a container for containing a liquid or a solid, for example, a powdered medical composition, for example, a drug. Specifically, the glass containers are, for example, vials, ampoules, syringes, cartridges and the like.

Further, in the fifth aspect, the present invention provides a processing apparatus of a glass member comprising the device according to the present invention described above and/or below. The apparatus comprises, in addition to the device according to the present invention described above and/or below, other kinds of various elements which are necessary for processing the glass member when using the device according to the present invention. For example, the processing apparatus of the present invention is an apparatus for forming a heated glass member into a glass container, and comprises a mandrel and a roller(s) to form into a mouth portion of the glass container as well as a bottom plate and a roller(s) if necessary to form into a bottom portion of the glass container, and characterized in that at least one of these roller(s), the mandrel and the bottom plate is a device of the present invention.

In the sixth aspect, the present invention provides a processing system for a glass member which comprises, in addition to the processing apparatus of the present invention described above and/or below, other various kinds of apparatuses (for example, an apparatus for conveying the glass members, an apparatus for heating the glass members as predetermined manner and an apparatus for controlling the operations of these apparatuses), which are required when the glass member is processed using the processing apparatus of the present invention.

### [Effect of the invention]

When the device of the present invention is used in processing a glass member, particularly in manufacturing a glass container, the slipperiness between the portion made of the impregnated graphite material of the device and the heated portion of the glass member is improved. As a result, an amount of oil used when processing the glass member, particularly when arranging its shape, can be reduced as compared with an amount of oil which is used in the conventional method. In a preferred embodiment, an amount of oil used can be significantly reduced, and in a particularly preferred embodiment, no oil needs to be used. As a result, the workload of oil removal in the oil removing step which is carried out in the conventional method, can be reduced, so that the step can be simplified. Further, in a particularly preferable embodiment, the oil removing step can be omitted.

Further, when processing the glass member using the impregnated graphite in the device of the present invention, it is suppressed that irregularities are formed on a portion of the device that comes into contact with the glass member, so that generations of transverse wrinkles, longitudinal wrinkles and cracks on the processed surface of the glass member are remarkably suppressed, which results in the better smoothness of the processed surface of the glass member as well as the improvement of the light reflectivity of the obtained glass container. In a particularly preferred embodiment, the obtained glass container has an arithmetic mean roughness (Ra) of the surface of the portion formed by using the device of the present invention is very small, for example, 0.035 mm to 0.045 mm, which shows greatly improved smoothness when compared with the case of processing with using the conventional metal device.

### [Brief Description of Drawings]

[Figure 1] Fig. 1 schematically shows a method of manufacturing a glass container by forming a glass member while using a device according to the present invention.
[Figure 2] Fig. 2 schematically shows a state in which a mandrel of the device according to the present invention is inserted from a lower end of a glass member, and the device and the glass member are pivotally rotated while a flange portion inside of the glass member is in contact with a mandrel so as to process the inside of the flange portion.

### [Embodiments for Carrying out Invention]

Next, with reference to the drawings, the device for processing, particularly forming, a glass member of the first aspect according to the present invention will be mainly described. Basically, the present inventions of the other aspects are characterized by comprising or using such device. Therefore, by describing the device according to the present invention, those skilled in the art can easily understand the present inventions of the other aspects.

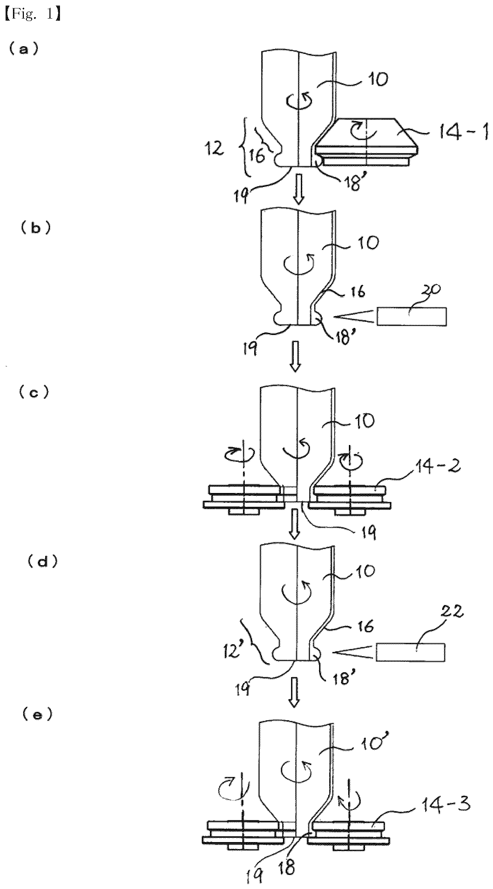

Fig. 1 schematically shows a method of processing a glass member in steps while using the device of the present invention, that is, a method of forming a glass member to manufacture a glass container for each process. In the illustrated embodiment, the process of producing a glass container 10' is shown in steps wherein the device 14 of the present invention is brought into contact with one open end 12 of the glass member 10 to provide a mouth portion 12' having a shoulder portion 16 and a flange portion 18 at the edge of the shoulder portion 16 so that the glass container 10' is produced. It is noted that the right halves of the glass members 10 are schematically shown in their cross-sectional views.

In the step of Fig. 1(a), the heated glass member 10 is preformed. The device of the present invention in the form of a roller 14-1 (which is also referred to as a supplemental forming roller (1)) and the glass member 10 are constituted such that at least one of them is rotated so as to pivotally rotate them in the opposite directions with each other as shown with the arrows while the device 14-1 is brought into contact with one end 12 of the glass member 10 heated in advance to the processable temperature. It is noted that only one roller device 14-1 is shown, but it is preferable that the roller device is located on each side of the glass member 10 as a pair (that is, the one device is located away from the other by 180 degrees about the axis of the glass member). In other embodiment, three or more devices may be used which are located separately by an equal angle about the axis of the glass member (for example, three rollers which are located separately by 120° about the axis of the glass member). By processing the glass member 10 (that is, deforming the glass member) as shown in Fig. 1(a), a shoulder portion 16 is formed at the end portion 12, and also a flange portion 18' which is in its preliminary stage is formed.

As can be readily understood, the device 14-1 of the present invention is in the overall form wherein a truncated cone portion and two disk-shaped portions (including a connecting portion between these portions) connected to the bottom surface of the truncated cone portion are integrated, and a portion of the device which portion comes into contact with the heated end portion 12 of the glass member 10 is formed of the impregnated graphite material, for example a glassy carbon impregnated graphite material. That is, at least an outer circumferential surface of the roller 14-1 (that is, the side surface of the truncated cone portion and the side surfaces of the two disk-like portions and the connecting portion between them) is formed of the impregnated graphite material. In the shown embodiment, the surface of the roller device 14-1 which surface comes in contact with the glass member 10 is a side surface portion of the truncated cone portion, and such contacting surface of the roller device may be such that a curved surface of which line corresponding to the generatrix of the side surface is curved.

In the step of Fig. 1(b), after the step (a), the vicinity of the flange portion 18' of which temperature has been lowered is heated to a processable temperature by the burner 20. In the step of Fig. 1(c), a pair of rollers 14-2 (which is also referred to as supplemental forming rollers (2)) in other embodiment of the present invention and the flange portion 18' are pivotally rotated as in Fig. 1(a) for further preforming while the rollers 14-2 are in contact with the vicinity of the heated flange portion 18' outside the flange portion 18'. The device 14-2 of the present invention is in the form wherein three disk-like portions of which diameters are different are integrally stacked, and similarly to the device 14-1, a portion of the device which comes into contact with the heated flange portion 18' is made of the impregnated graphite material, for example a glassy carbon impregnated graphite material. That is, at least the outer peripheral surfaces of the upper two disk-like portions (i.e., the side surfaces of the disk-like portions) of the rollers 14-2, and a peripheral upper surface of the lower disk-like portion which comes in contact with at least the edge of the flange portion 18' (that is, the opening surface 19 of the glass member) are made of the impregnated graphite material.

In the step of Fig. 1(d), after the step (c), the flange portion 18' is again heated to the processable (or workable) temperature by the burner 22. In the step of Fig. 1(e), the heated flange portion 18' is formed for its finishing. Rollers 14-3 (which are also referred to as finish forming rollers) of the present invention which are in the same forms as in the embodiment of Fig. 1(c) and the flange portion 18' are pivotally rotated as in Fig. 1(c) while the rollers 14-3 are in contact with the heated flange portion 18'. The device 14-3 of the present invention is also in the form wherein three disk-like portions of which diameters are different are stacked. Similarly to the device 14-2, a portion of this device which portion comes into contact with the heated flange portion 18' is made of the impregnated graphite material, for example, a glassy carbon impregnated graphite material.

That is, at least the outer peripheral surfaces of the upper two disk-like portions (i.e., the side surfaces of the disk-like portions) of the rollers 14-3, and a peripheral upper surface of the lower disk-like portion which comes in contact with at least the edge of the flange portion 18' (that is, the opening surface 19 of the glass member) are made of the impregnated graphite material. When processed as shown in Fig. 1(e), the flange portion 18' shown in Fig. 1(d) having a chamfered round edge is deformed into the form of the flange portion 18 having an angled portion.

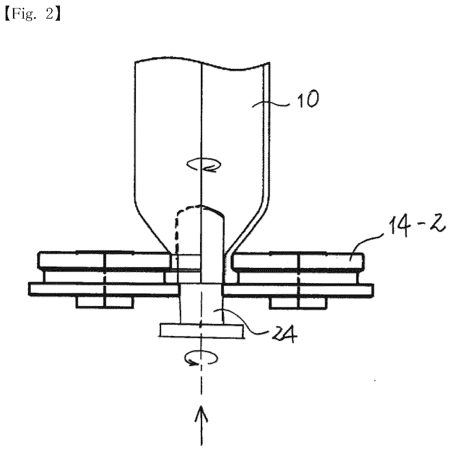

Although not shown in Fig. 1, for example, when the glass member 10 is processed as shown in Figs. 1(a), 1(c) and/or 1(e), a mandrel 24 as the device of the present invention may be inserted upward (as shown by the arrow) from the opening 19 at the lower end of the glass member 10 into the inside thereof as schematically shown in Fig. 2 (which schematically shows the state of Fig. 1(c)), followed by pivotally rotating them as shown with the arrows while the mandrel 24 as the device of the present invention is in contact with the inside of the flange portion 18' of the glass member 10 so as to process the glass member 10, especially the inside of the flange portion. In this embodiment, at least a portion, preferably a whole of the outer peripheral portion of the mandrel (that is, a side surface portion of the mandrel) which comes into contact with the inside of the flange portion is made of the impregnated graphite material, for example a glassy carbon impregnated graphite material.

For example, in the embodiment shown in Fig. 1, when the roller 14-1 is used, a mandrel may be inserted into the inside of the glass member 10 as an supplemental forming shaft (1) 24 so as to process the glass member. In addition to or alternatively to this, when the rollers 14-2 are used, a mandrel may be inserted into the inside of the glass member 10 as an supplemental forming shaft (2) so as to process the glass member. In addition to or alternatively to this, when the rollers 14-3 are used, a mandrel may be inserted into the inside of the glass member 10 as a supplemental finishing shaft so as to process the glass member.

In the embodiment shown in Fig. 1, it is explained that all of the three kinds of the rollers (14-1, 14-2 and 14-3) are the devices according to the present invention. It is noted that at least one (for example, the roller 14-3) of the devices which come into contact with and process a heated portion of the glass member may be according to the present invention. Further, in addition to or alternatively to the device(s) of Fig. 1 according to the present invention, when mandrels as shown in Fig. 2 is used as described above, at least one of them may be a device of the present invention.

Generally, in the production a glass container such as a vial by processing a glass member while using a processing device such as a roller, a mandrel or a bottom plate, when the processing device and the glass member are slid in the opposite directions while the device is pressed against and in contact with the surface of the glass member, the contact surface of the device is generally worn due to the friction with the glass member surface. When producing many glass containers continuously, the surface of the device (for example a surface of the plate) which surface comes into contact with the glass member is roughened. If processing is continued with using such a device, a surface of the glass container is roughened, which lowers the light reflectivity, so that it is necessary to replace the device with a new device.

In order to suppress the above described friction and improve the slipperiness between the device and the glass member, oil is used. However, when the device according to the present invention is used wherein the impregnated graphite material is used, the number of the glass containers that can be manufactured during a period from the start of using the device up to the time to replace the device with a new one is equivalent to, and in a preferable embodiment, larger than the number of the manufactured glass containers when using a device made of the other kind of material (such a conventional metal, graphite or the like) even though an amount of the oil used is reduced, and in a particularly preferred embodiment, no oil is used in using the device according to the present invention. In other words, the device according to the present invention makes an interval for replacing the device equivalent or longer. Lowering an amount of the oil used simplifies an additional step for removing the oil. When no oil is used, such removing step is not required.

Although not bound by any particular theory, it can be presumed that the reasons why an amount of the oil to be used is lowered when processing the glass member with the impregnated graphite materials, especially the glassy carbon impregnated graphite are as follows:
The slipperiness between the glass member and the impregnated graphite material of the device is inherently good, and further the impregnated graphite material wears moderately without excessively wearing in a preferred embodiment. As a result, graphite fine particles generated by wear can exist between the device and the glass member and act as a lubricant. Even if the graphite fine particles are attached to the glass container, an amount of the particles is very small, and they are burnt off at the temperature of the post-processing of the glass container (for example, annealing) so that substantially no adverse effect is caused on the produced glass container.

### [Example]

Using the apparatus and the steps as shown in Fig. 1, a glass member formed from a glass tube was formed to produce a vial as a glass container. It is note that the rollers 14-1 and 14-2 in the steps (a) and (d) in Fig. 1 were metal rollers, respectively, and the devices according to the present invention were used as the rollers 14-3 in the step Fig. 1(e). In any of the steps in which the roller(s) was used, a forming shaft was used as the mandrel while inserting the shaft into the inside of the glass member. The details of the production are as follows:

- Roller 14-1: supplemental forming (preforming) roller (1)
   substrate: stainless steel (S45C)
   with lubricant oil used
- Supplemental forming (preforming) shaft (1)
   substrate: stainless steel (S45C)
   with lubricant oil used

- Roller 14-2: supplemental forming (preforming) roller (2)
   substrate: stainless steel (S45C)
   surface treatment: Non
   with lubricant oil used
- Supplemental forming (preforming) shaft (2)
   substrate: stainless steel (S45C)
   surface treatment: Non
   with lubricant oil used

- Roller 14-3: finish forming (final forming) roller (device according to the present invention)
   substrate: ET-10 (graphite, IBIDEN Co., Ltd.)
   surface treatment: glassy carbon impregnated graphite
      (VGI: registered trademark of IBIDEN Co., Ltd.)
   without lubricant oil used
- Finishing forming (final forming) shaft
   substrate: stainless steel (S45C)
   with lubricant oil used

Glass tube (made of borosilicate glass):
Diameter 24.5 mm, wall thickness : 1.2 mm
Produced vial: diameter 24.5 mm x height 50 mm capacity 10 mL

As shown in Fig. 1(a), one end 12 of the glass member 10 heated to a processable temperature (about 800 °C) was brought into contact with the supplemental forming roller (1) 14-1 while a supplemental shaft (1) 24 was inserted into the glass member so as to supplementarily form the shoulder portion 16. In this step, the glass member was pivotally rotated. Further, a lubricant oil was deposited on the both surfaces of the roller 14-1 and the shaft 24.

Then, after the vicinity of the shoulder periphery was heated to the processable temperature (about 800 °C) as shown in Fig 1(b), the supplemental forming rollers (2) 14-2 were brought into contact with the flange portion 18' while inserting a supplemental forming shaft (2) into the glass member 10 so as to supplementarily form (or preform) the mouth portion 12'. In this step, the glass member was pivotally rotated. Further, the lubricant oil was deposited on the both surfaces of the rollers and the shaft (2) .

Next, as shown in Fig. 1(d), after the vicinity of the supplementarily formed shoulder portion was heated to the processable temperature (about 800 °C) again as shown in Fig 1(d), the finishing forming rollers 14-3 were brought into contact with the glass member while inserting a finish forming shaft into the glass member as shown in Fig. 1(e) so as to finish-form the shoulder portion and flange portion 18. In this step, the glass member was pivotally rotated. Further, the lubricant oil was deposited on the surface of the finish forming shaft, but not deposited on the surfaces of the rollers.

### [Comparative Example]

The above Example was repeated except that the finish forming rollers (which correspond to the devices 14-3) were made of a stainless steel (substrate made of S45C), and oil was deposited on the surfaces of the rollers.

### [Test Examples]

As to the vials obtained in the Example and the vials obtained in the Comparative Example, imaging tests and surface roughness measurements were carried out as follows:

### (Imaging Test)

A plate on which evenly separated lines were drawn each having a thickness of 0.25 pt was prepared. Such plate was disposed behind the obtained vial, and an image of the lines was obtained with an optical camera which image can be seen through a side surface of the flange portion of the vial. The obtained image of the lines was estimated as to the distortion and also the sharpness of the lines of the image. It is noted that the estimation was carried out for each of the vials produced in the Example and the Comparative Example.

As a result, the lines on the plate disposed behind the plate which were seen through the side surface of the flange portion of the vial of the Example were clearly sharper, and also their distortions of the lines were smaller when compared with those in the case of the Comparative Example.

### (Surface Roughness)

Using a surface roughness measuring machine (SURFTEST SJ-500, manufactured by Mitutoyo Corporation), the surface roughness (arithmetic mean roughness: Ra) on the outer side surface of the flange portion of the manufactured vial was measured. The measurement was carried out three times for each of the vials produced in the Example and the Comparative Example. The results are shown in Table 1 below:

**[Table 1]**

| | Average value of Ra (mm) |
|---|---|
| Vial of Example | 0.040 |
| Vial of Comparative Example | 0.065 |

Furthermore, the state near the flange portion was visually observed. Compared with the vial produced in the Comparative Example, the vial produced in the Example had less wrinkles or horizontal streaks on the open end surface and the flange portion, so that the obtained vial had a glossy open end surface. This means that the smoothness of such portions is improved.

### [Industrial Applicability]

With the device, the processing method and the like according to the present invention as described above, the glass containers, for example, the vials can be produced by the simplified method, and also the produced glass containers, for example, the vials have better smoothness. Therefore, when the device of the present invention is used for forming the glass containers, for example, the vials, the smoothness of the portions formed by using the device is improved, so that when the glass containers, for example, vials are optically inspected, the light transmittance on their open surfaces and the flange portions is improved. As a result, in the automatic inspection process, the rate of off-specification glass containers due to insufficient smoothness of the glass containers, for example, the vials is reduced, that is, the rate of the false inspection is reduced. Therefore, the detection accuracy during the inspection of the glass containers, for example, the vials is improved.

### [Explanation of References]

- 10:: glass member,
- 10':: glass container,
- 12:: one end,
- 12':: mouth portion
- 14:: device of the present invention (roller),
- 16:: shoulder portion,
- 18, 18':: flange portion,
- 19:: opening,
- 20, 22:: burner,
- 24:: mandrel

## Claims

1. A device for processing a glass member at least a portion of which is heated to a processable temperature, **characterized in that** at least a portion of the device which comes into contact with a heated portion of the glass member is formed of an impregnated graphite material.

2. The device according to claim 1, wherein the impregnated graphite material is a glassy carbon impregnated graphite material.

3. The device according to claim 1 or 2 which is a roller, a mandrel or a bottom plate which is used to produce a glass container by forming the glass member.

4. A method for processing a glass member, **characterized in that** the device according to any one of claims 1 to 3 is used wherein the a portion of the device which portion is formed of the impregnated graphite material is brought into contact with a predetermined portion of the glass member heated to the processable temperature for processing of the glass member.

5. A method for manufacturing a glass container with using the device according to any one of claims 1 to 3 and using a glass tube as the glass member, **characterized in that** the method comprises the steps of
(1) heating a portion of the glass tube to the processable temperature, and
(2) pivotally rotating at least one of the glass tube and the device according to any one of claims 1 to 3 so that they are rotated relatively in the opposite directions while pressing a portion of the graphite carbon material of the device against the heated portion of the glass tube.

6. A glass container manufactured by the method according to claim 5.

7. A glass member processing apparatus **characterized in that** it comprises the device according to any one of claims 1 to 3.

8. A glass member processing system **characterized in that** it comprises the processing apparatus according to claim 7.
